# EUROPÄISCHE PATENTSCHRIFT

(11) **EP 2 230 266 B1**
(45) Veröffentlichungstag und Bekanntmachung des Hinweises auf die Patenterteilung: **04.01.2017**
(21) Anmeldenummer: 10153764.5
(22) Anmeldetag: 17.02.2010
(51) Int. Cl.: C08G 18/40, C08G 18/42, C08G 18/48, C08G 18/66, C08J 9/00, C08K 9/04, C08J 9/14, C08G 18/76, C08G 101/00

(54) **KOMPATIBILISIERUNGSMITTEL ZUR VERBESSERUNG DER LAGERSTABILITÄT VON POLYOLMISCHUNGEN**
COMPATIBILITY RESOURCES TO IMPROVE THE STORAGE STABILITY OF POLYOL MIXTURES
AGENT DE COMPATIBILITÉ DESTINÉ À L'AMÉLIORATION DE LA STABILITÉ AU STOCKAGE DE MÉLANGES DE POLYOL

(30) Priorität: 17.03.2009 DE 102009001595
(43) Veröffentlichungstag der Anmeldung: 22.09.2010
(73) Patentinhaber: Evonik Degussa GmbH, 45128 Essen (DE)
(72) Erfinder: Glos, Martin, 46325, Borken (DE); Landers, Rüdiger, 45257, Essen (DE); Naumann, Matthias, Greensboro, NC 27407 (US); Emmrich, Eva, 45149, Essen (DE)

(56) Entgegenhaltungen:
- EP-A2- 0 150 427
- WO-A1-2008/031757
- WO-A2-2005/085310
- US-A- 3 945 939

## Beschreibung

Die Erfindung betrifft neuartige Zusammensetzungen bestehend aus Partikeln und Trägermedien als Kompatibilisierungmittel zur Verbesserung der Lagerstabilität zumindest zweier oder mehrerer nicht miteinander mischbaren Polyole, wobei auf nachwachsenden Rohstoffen basierende Polyole enthalten sind, und die Verwendung der so kompatibilisierten Polyolmischungen zur Herstellung von Schäumen durch Umsetzung der Polyolmischungen mit Polyisocyanaten, wobei Polyurethan- und/oder Polyisocyanurat- und/oder Polyharnstoffschäume gebildet werden.

Als homogen im Rahmen dieser Anmeldung sollen Mischungen aus zwei oder mehreren nicht miteinander mischbaren Polyol-Komponenten verstanden werden, die keine makroskopisch sichtbare Phasentrennung aufweisen. Diese Polyolmischungen können in dispergierter Form Feststoffe aufweisen als auch Emulsionen darstellen, die keine oder nur noch eine verzögerte Phasenauftrennung erfahren.
In der Technik angewandte Polyolmischungen bestehen aus zumindest zwei, oft jedoch deutlich mehr als zwei Polyolkomponenten unterschiedlicher Polarität bzw. Hydrophilie, die die Komponenten teilweise unmischbar oder nur teilweise untereinander mischbar machen. Die Phasentrennung dieser Mischungen führt zu Problemen bei Verwendung, beispielsweise der Verschäumung zu Polyurethan-Schäumen.

Zusammensetzungen, bestehend aus Partikeln und einem Trägermedium, die die Bildung solcher homogener Polyolmischungen begünstigen, werden in dieser Anmeldung als Kompatibilisierungsmittel bezeichnet. Die Polyolmischungen können neben diesen Kompatibilisierungsmitteln gegebenenfalls beispielsweise Wasser, weitere Lösungsmittel, Treibmittel, Feststoffe oder auch andere Zusatz- und Hilfsstoffe enthalten.

Polyolmischungen als solche sind als Polyolkomponente zur Herstellung von Polyurethanschäumen im Stand der Technik bekannt.
Die Kompatibilisierungsmittel werden somit zur Kompatibilisierung oder Homogenisierung der ohne weiteres nicht mischbaren Polyole eingesetzt. Der Begriff der Kompatibilisierung wird als eingeführter Begriff in der Fachliteratur verwendet, obwohl der Vorgang prinzipiell einer Homogenisierung oder Emulgierung entspricht.
Eine kompatible Polyolmischung zeigt daher ein makroskopisch einphasiges Erscheinungsbild.

Polyurethanschäume werden in vielfältigen Anwendungen, zum Beispiel in Kühlschränken, Isolationspanelen, Autositzen oder Matratzen zur thermischen Isolierung, zur Energieabsorption und zur Schallabsorption genutzt. Von daher ist es notwendig, Polyurethane mit unterschiedlichen genau eingestellten Spezifikationen/Parametern herzustellen. Zu diesen wichtigen Parametern gehören beispielsweise mechanische Eigenschaften, die Dichte und die Formzeit.

Bei der technischen Herstellung von Polyurethanschäumen werden Polyole und insbesondere Polyolmischungen als reaktive Komponente für die Umsetzung mit Polyisocyanaten verwendet. Die Eigenschaften des gebildeten Schaums hängen in besonderem Maße von der Struktur und der chemischen Zusammensetzung der verwendeten Polyolmischungen ab.

In der PU-Industrie (Schaum-Bereich) werden unterschiedlichste Typen von Polyolen verwendet. So gibt es die z.B. die Einteilung nach Polyether-Polyolen und Polyester-Polyolen, je nachdem wie die chemische Struktur der Verbindungen aussieht.

Weiterhin werden bei den Polyolen Unterscheidungen nach dem Syntheseweg dieser wichtigen Verbindungsklasse gemacht. So können die Polyole auf nachwachsenden Rohstoffen basieren und somit dem modernen Begriff der Erneuerbarkeit genügen.
Solche aus nachwachsenden Rohstoffen hergestellten Polyole werden daher als NOPs (natural oil based polyols) bezeichnet.
Dazu gehören Vertreter der z.B. pflanzlichen Öle oder Extrakte von pflanzlichen Rohstoffen, bei deren Herstellung keine oder nur eine geringe Anzahl an chemischen Veränderungen/Syntheseschritten benötigt werden.

Die EP 0 543 250 beschreibt eine gegen Entmischung stabilisierte, aktiven Wasserstoff enthaltende Abmischung beruhend auf Amidinen.

Die US 4485032 beschreibt Zusammensetzungen aus inkompatiblen hochmolekularen Polyolen und Ethylenglykol, die durch Zusatz von Harnstoff und substituierten Harnstoffen kompatibilisiert, das heißt miteinander mischbar werden.

Aktuelle Trends sind z.B. die Verwendung von naturbasierenden Polyolen (NOPs), die mit konventionellen erdölbasierenden Polyolen gemischt werden oder genereller die Verwendung von mindestens zwei Polyolen, die unterschiedliche Polaritäten aufweisen z.B. durch unterschiedliche Gehalte an ringgeöffnetem Ethylenoxid. In beiden Fällen tritt das Problem auf, dass die zu verschäumenden (verarbeitenden) Polyole nicht mehr löslich ineinander sind und die Polyolmischung eine Emulsion oder Dispersion darstellt, die oftmals nur begrenzt lagerstabil ist; solche Mischungen werden im Rahmen der Anmeldung als nicht miteinander kompatibel bezeichnet.

In US 20070238800 wird so eine lagerstabile, gegenüber Isocyanaten reaktive Zusammensetzung beschrieben, die mindestens 10 % eines Pflanzenöl-basierenden Polyols enthält, wobei zur Verbesserung der Lagerstabilität NonylphenolEthoxylat mit mindestens 25 EO (Ethylenoxideinheiten) beschrieben werden.

Es werden hier nur komplexe Mischungen von Polyetherpolyolen mit Rizinusöl-basierendem Polyol, umfassend mindestens fünf Komponenten beschrieben. Die in dieser Anmeldung beschriebenen Löslichkeitsprobleme mit Polyesterpolyolen und Pflanzenöl-basierenden Polyolen lassen sich mit der dort beschriebenen Methode nicht lösen. Zumal neben der Verwendung von Pflanzenöl-basierenden Polyolen synthetische Polyole mitverwendet werden müssen.

Die DE 2341294 beschreibt Mischungen von nicht miteinander mischbaren Polyhydroxypolyethern, die durch Zusatz von inerten oberflächenaktiven anorganischen Substanzen mit einer spezifischen Oberfläche von 10 bis 800 m²/g in einphasige System überführt werden können.
Hier wird erwähnt, dass man hochtourige Rührer, also starke Scherkräfte, benötigt, um die anorganischen Substanzen in die Mischungen einzuarbeiten. Oftmals stehen den Herstellern von Polyolmischungen allerdings keine geeigneten Rührer zur Verfügung um im technischen Maßstab derartige Scherkräfte aufbringen zu können. Außerdem stellt die Handhabung der hier beschriebenen Feststoffe, die oftmals sehr niedrige Schüttdichten haben, einen großen Aufwand dar. Dieser hohe technische Aufwand stellt einen großen Nachteil bei diesem Verfahren dar.

Besonders wenn eine entsprechende Polyolmischung nach ihrer Herstellung nicht umgehend verwendet werden kann oder keine Möglichkeit besteht, sie bis zur Verwendung ständig zu rühren, um sie homogen zu halten, ist eine entsprechende Lagerstabilität dringend erforderlich.
Oftmals werden Polyolmischungen zur Verschäumung mit allen nötigen Komponenten, außer dem Isocyanat, vermischt und die Mischung in dieser Form transportiert und bis zur Verschäumung gelagert. Hierzu können zu den Polyolen die nach dem Stand der Technik bekannten und benötigten Stoffe zugesetzt werden wie z.B. Treibmittel, Stabilisatoren, Katalysatoren, Farbstoffe, Flammschutzmittel, sowie weitere Hilfsstoffe, die zur Verarbeitung, Herstellung und Verwendung des Schaums benötigt werden. Solche Zusatzstoffe enthaltenden Polyolmischungen werden auch als "Systeme" oder im europäischen Raum als "A-Komponente" bezeichnet.

Im der weiteren Betrachtung werden unter dem Begriff Polyolmischung sowohl die Polyolmischungen selbst als auch Mischungen verstanden, die die oben beschriebenen Zusatzstoffe enthalten.

Für eine vielseitige Einsetzbarkeit der Polyolmischung ist es notwendig, dass sie an Ort und Zeit ihres Einsatzes mit möglichst geringem Aufwand direkt verwendet werden können. In diesem Zusammenhang ist insbesondere das Vorliegen der Polyolmischung in homogener, wie oben definierter, Form zu verstehen.
Dies ist besonders dann von Bedeutung, wenn die Polyolmischungen nicht direkt verwendet werden können, sondern bei den unterschiedlichen in der Praxis vorkommenden Transport- und Lager bedingungen (Temperaturbelastung, wechselnde Temperaturen, fehlende Agitationsmöglichkeit, etc.) gelagert werden müssen.

In der Praxis übliche Methoden zur Herstellung und zum Erhalt der Homogenität bzw. Verhinderung der Phasentrennung der Systeme bestanden darin, die Komponenten in den Vorrats- und Verteilungstanks mit aufwändigen Rührwerken oder durch ständiges Umpumpen in Bewegung zu halten. Eine Verhinderung der Separation der Komponenten und eine ausreichende Homogenisierung sind jedoch selbst mit diesen technisch aufwändigen Maßnahmen nicht immer mit Sicherheit zu gewährleisten.

Bei einer nicht ausreichenden Homogenisierung stimmt bei der Mischung mit den Polyisocyanaten die Stöchiometrie, d.h. das vorgegebene Verhältnis der Polyole in der Polyolmischung, der reaktiven Mischung in den Bereichen der Inhomogenität nicht mehr. Die Einhaltung der erforderlichen wichtigen Parameter der aufeinander abgestimmten Komponenten ist in diesen Fällen nicht mehr gewährleistet, was die Herstellung von fehlerhaften Polyurethanschäumen zur Folge hat.

Man hat deshalb versucht, unter Verwendung von Dispergier- und/oder Emulgierhilfsmitteln diese Nachteile zu überwinden.

So wird in der WO 2005/085310 eine Prepolymerzusammensetzung, insbesondere zur Erzeugung von Polyurethanmontage- und Dämmschäumen vorgeschlagen, wobei die Prepolymerzusammensetzung Polyurethanprepolymere enthält aus der Reaktion einer ersten Komponente, welche hydrophobe Polyesterpolyole mit mindestens zwei Hydroxygruppen umfasst und einer zweiten Komponente, welche Polyisocyanate mit mindestens zwei Isocyanatgruppen umfasst, welche dadurch gekennzeichnet ist, dass die Polyesterpolyole zumindest teilweise Umesterungsprodukte aus pflanzlichen oder tierischen Ölen mit aromatischen Di- und/oder Tricarbonsäuren, deren Estern oder Anhydriden sowie Polyolen sind.

Gemäß der EP 0909792 werden 1K-Polyurethansynthesezusammensetzungen beschrieben, enthaltend ein synthetisches Polymer (T) als Emulgator, sowie zwei Polyole, die ansonsten nicht miteinander mischbar sind.
Die so hergestellten Mischungen umfassen recht komplexe synthetische polymere Systeme, die erst durch aufwändige Synthese zugänglich sind.
Die im Stand der Technik aufgeführten Kompatibilisatoren sind entweder schwierig in die Polyolmischungen einzuarbeiten oder nur über aufwändige Mehrstufensynthesen herzustellen und des Weiteren enthalten die Mischungen Komponenten, die nicht gleichermaßen in allen technischen Anwendungsgebieten der Polyurethanschäume eingesetzt werden können oder sogar unverträglich sind.
Die Aufgabe der vorliegenden Erfindung war es, die Nachteile des Standes der Technik zu überwinden und neue Kompatibilisierungsmittel für nicht mischbare Polyolzusammensetzungen zur Verfügung zu stellen. Überraschenderweise wurde gefunden, dass dispergierte Partikel in der Lage sind, diese Aufgabe zu erfüllen.
Ein Gegenstand der Erfindung sind daher Kompatibilisierungsmittel enthaltend eine Partikeldispersion in einem Trägermedium, auch Dispersionsphase genannt, deren Verwendung als Homogenisierungsmittel für mindestens zwei nicht miteinander mischbare Polyole, wobei auf nachwachsenden Rohstoffen basierende Polyole enthalten sind, dadurch gekennzeichnet, dass Partikel verwendet werden, die eine grenzflächenstabilisierende Funktion übernehmen und dadurch die Phasenseparation vermeiden und die Lagerstabilität der Polyolmischung verbessern.

Es wird angenommen, dass sich die Dispersionsphase, das Trägermedium, in einer der Flüssigphasen der inkompatiblen Polyolmischung löst und dann die "freigesetzten" Partikel zur Grenzfläche wandern und dort ihre Emulgatorwirkung entfalten.

Als Bestandteil der Kompatibilisierungsmittel können Partikel verwendet werden, die ausgewählt sind aus der Gruppe der Halbmetalloxide, Metalloxide (beispielsweise von Al, Si, Ti, Fe, Cu, Zr, B etc.), Mischoxide, Nitride, Carbide, Hydroxide, Carbonate, Silikate, Siliconharze, Silicone und/oder Silica, und/oder organischen Polymere, wobei diese genannten Partikelklassen alle gegebenenfalls oberflächenmodifiziert, wie beispielsweise hydrophobiert oder teilhydrophobiert sein können. Zur Hydrophobierung oder Teilhydrophobierung kann beispielsweise mindestens eine Verbindung aus der Gruppe der Silane, Siloxane, quaternären Ammoniumverbindungen, kationischen Polymere und Fettsäuren oder deren Anionen, eingesetzt werden.

Weiterhin werden vorzugsweise in mindestens einer Dimension nanoskalige Partikel oder nanostrukturierte Partikel oder Nanoobjekte in den Kompatibilisierungsmitteln eingesetzt. Unter nanoskaligen Partikeln, nanostrukturierten Partikeln oder Nanoobjekten werden im Rahmen der vorliegenden Erfindung Materialien verstanden, die entweder in ein, zwei oder drei äußeren Dimensionen nanoskalig sind, vorzugsweise zumindest in einer Dimension eine Größe von 1 bis 100 nm aufweist, wie z. B. Nanoplättchen, Nanostäbchen und Nanopartikel. Unter nanostrukturierten Partikeln werden in der vorliegenden Erfindung Materialien bzw. Partikel verstanden, die eine innere nanoskalige Struktur aufweisen. Typische Vertreter sind z. B. Aggregate und Agglomerate von Nanoobjekten.
Den erfindungsgemäß zu verwendenden Partikeln kommt die Eigenschaft zu, dass sie durch ihre Oberflächenstruktur und/oder deren Modifizierung bedingt zur Grenzfläche zwischen miteinander nicht mischbaren Flüssigkeiten wandern und dort eine emulgator-analoge grenzflächenaktive Funktion übernehmen. Die Oberfläche der Partikel kann ganz oder teilweise hydrophobiert sein. Ein Maß für die Hydrophobierung ist beispielsweise die Methanolzahl oder Steigzahl und zeigt damit die (Wasser)-Benetzbarkeit des Partikels gegenüber einem Medium an. Die Methanolzahl oder auch die THETA-Kontaktwinkelmethode nach der Lukas-Washburn-Gleichung bieten die Möglichkeit zumindest annähernd die Hydrophobie einer Partikeloberfläche ableiten zu können, wie beispielsweise in der DE 10260323 dargestellt. Nach der DIN EN ISO 862: 1995-10 ist die Hydrophobie als die konstitutionelle Eigenschaft eines Moleküls oder einer Molekülgruppe definiert, sich gegenüber Wasser exophil zu verhalten, d. h. sie zeigen die Tendenz, in Wasser nicht einzudringen oder die wässrige Phase zu verlassen.

Zur Beurteilung der erfindungsgemäßen Kompatibilisierungsmittel und der damit hergestellten homogenisierten, kompatibilisierten, d.h. homogenisierten Polyolmischungen wird die Entmischung/Aufrahmung einer (kompatiblen) Polyolmischung bei konstanter Temperatur über die Zeit verfolgt. Ist eine Phasenseparation innerhalb von weniger als 24 Stunden makroskopisch erkennbar, so ist das Ergebnis unzureichend. Umgekehrt gilt die Polyolmischung als kompatibilisert durch Zusatz der erfindungsgegenständlichen Kompatibilisierungsmittel, wenn eine Phasenseparation von weniger als 6 Volumenprozent, bevorzugt weniger als 3 Volumenprozent und insbesondere weniger als 1,5 Volumenprozent innerhalb von 24 Stunden bei Raumtemperatur erfolgt.

Ganz besonders bevorzugt sind die Partikel anorganischer Natur und weisen gegebenenfalls eine organische Oberflächenmodifikation auf.

Besonders bevorzugte Bestandteile der Kompatibilisierungsmittel sind Partikel, die eine mittlere Primärpartikelgröße in mindestens einer Dimension von < 1000 nm, bevorzugt < 500 nm und besonders bevorzugt von 1 bis 100 nm aufweisen. Die Primärpartikelgröße kann auf dem Fachmann bekannte Weise bestimmt werden, beispielweise über REM, TEM, DLS oder statische Lichtstreuung etc. Vorzugsweise wird die Primärpartikelgröße durch die optische Auswertung einer durch Transmissionselektronenmikroskopie erstellten Aufnahme bestimmt.

Geeignet zur Stabilisierung von Polyolmischungen sind nanoskalige, vorwiegend anorganische Partikel, z. B. SilicaPartikel, welche beispielsweise als Sole bzw. Dispersionen erhältlich sind. Ebenso geeignet sind oxidische Silicapartikel, z.B. pyrogene Aerosile, gefällte Sipernate oder nach dem Stöber-Prozeß hergestellte Silicapartikel.

Als Co-Emulgatoren können in dem erfindungsgemäßen Verfahren allgemein auf die Partikel aufziehende, kationische, nichtionische, amphotere oder anionische oberflächenaktive Substanzen verwendet werden. In dem erfindungsgemäßen Verfahren können demnach als Co-Emulgatoren für Partikel mit negativem Zeta-Potential insbesondere Verbindungen ausgewählt aus der Gruppe der kationischen Tenside eingesetzt werden. Als kationische Co-Emulgatoren können z. B. die unter den Handelsnamen VARISOFT 470 P, VARISOFT TC-90, VARISOFT 110, VARISOFT PATC, AROSURF TA-100, ADOGEN 442-100 P, ADOGEN 432, ADOGEN 470, ADOGEN 471, ADOGEN 464, VARIQUAT K 300, VARIQUAT B 343, VARIQUAT 80 ME, REWOQUAT 3690, REWOQUAT WE 15, REWOQUAT WE 18, REWOQUAT WE 28 oder REWOQUAT CR 3099 der Evonik Goldschmidt GmbH (die genannten in Großbuchstaben geschriebenen Produkte sind eingetragene Warenzeichen der Evonik Goldschmidt GmbH) erhältlichen Produkte eingesetzt werden. Bevorzugt werden in dem erfindungsgemäßen Verfahren Cetyltrimethylammoniumbromid oder -chlorid (VARISOFT 300) oder VARISOFT PATC als kationische Co-Emulgatoren eingesetzt. Ebenso können als Co-Emulgatoren auch Trialkylamine eingesetzt werden wie beispielsweise tertiäre Amine wie Trioctylamin, Dimethyldodecylamin, Dimethylhexadecylamin, Dimethyldecylamin, Dimethyloctadecylamin, Dimethyllaurylamin, Dimethylstearylamin oder Didecylmethylamin. Für Partikel mit positivem Zeta-Potential können als Co-Emulgatoren insbesondere Verbindungen ausgewählt aus der Gruppe der anionischen Tenside wie beispielsweise Natriumlaurylsulfat, Natriumlaurylethersulfat, Sulfosuccinate wie REWOPOL SB DO 75, Alkyletherphosphate, Fettsäureanionen, N-Acylaminosäuren, Olefinsulfonate oder Alkylbenzolsulfonate eingesetzt werden. Die Co-Emulgatoren können die Wirkung des partikulären Kompatibilisators begünstigen oder auch optimieren.

Die erfindungsgemäßen Kompatibilisierungsmittel werden bevorzugt weitgehend frei von weiteren Co-Emulgatoren hergestellt. Werden trotzdem zusätzlich Co-Emulgatoren eingesetzt, so werden 0 bis 10 Gew.-% bezogen auf den Anteil der dispergierten Partikel, bevorzugt 0,05 bis 8 Gew.-% und besonders bevorzugt 0,2 bis 5 Gew.-% verwendet.

Ein weiterer Gegenstand der Erfindung sind Zusammensetzungen, die frei von nicht-partikulären Emulgatoren sind.
Kann aus anwendungstechnischen Gründen nicht auf einen nichtpartikuläre Emulgator verzichtet werden, so sind diese in Gehalten von > 0 bis unter 10 Gew.-% enthalten.

Auch die Verwendung von beispielsweise mit Silanen und Organopolysiloxanen modifizierten Partikeln ist möglich. Bevorzugt werden hierbei oxidische Partikel, z. B. pyrogene, gefällte oder nach dem Stöber-Prozess hergestellte Silicapartikel, eingesetzt, doch schließt dies nicht den Einsatz anderer partikulärer Materialien aus.

Eine derartige Oberflächenmodifizierung kann beispielsweise geschehen durch den Einsatz von mit Trimethylsiloxy-Gruppen endverkappten Dimethylpolysiloxanen, cyclischen Dimethylpolysiloxanen, α,ω-Dihydroxypolydimethylsiloxanen, cyclischen Methylphenylsiloxanen, mit Trimethylsiloxy-Gruppen endverkappten Methylphenylpolysiloxanen und/oder von mit Trimethylsiloxy-Gruppen endverkappten Dimethylsiloxan-Methylphenylsiloxan-Copolymeren, ggf. in der Gegenwart eines geeigneten Katalysators (beispielsweise Ammoniumcarbamat oder Alkalihydroxiden) und ggf. auch erhöhten Temperaturen.

Oberflächenmodifizierungsmittel können beispielsweise sein Trimethylchlorsilan, Hexamethyldisilazan, (Meth-)Acryloxypropyltrialkoxysilane, Aminopropyltrialkoxysilane, Polydimethylsiloxane, Polysiloxane, die Si-H-Gruppen tragen, oder reine Carbonsäuren, Chelatbildner oder Fluoropolymere. Weiterhin ist auch der Einsatz von Silanen mit zumindest teilweise fluorierten Alkylresten möglich, beispielsweise 3,3,4,4,5,5,6,6,7,7,8,8,8-Tridecafluorooctyl- oder 3,3,3-Trifluoropropylgruppen.

Wird die Oberflächenmodifizierung mit Silanen durchgeführt, so können bevorzugt hydrolysierbare Organosilane eingesetzt werden, die zusätzlich mindestens einen nicht hydrolysierbaren Rest aufweisen. Solche Silane werden durch die allgemeine Formel (I)

RₙSiX₍₄₋ₙ₎ (I)

dargestellt, mit
R = gleiche oder verschiedene nicht hydrolysierbare Gruppen,
X = gleiche oder verschiedene hydrolysierbare Gruppen oder Hydroxygruppen und
n = 1, 2, 3 oder 4.

In der allgemeinen Formel (I) können die hydrolysierbaren Gruppen X beispielsweise H, Halogen- (F, Cl, Br, I), Alkoxy-(bevorzugt Methoxy-, Ethoxy-, i-Propoxy-, n-Propoxy- oder Butoxy-), Aryloxy- (bevorzugt Phenoxy-), Acyloxy- (bevorzugt Acetoxy- oder Propionyloxy-), Acyl- (bevorzugt Acetyl-), Amino-, Monoalkylamino- oder Dialkylamino-Gruppen sein. Weiterhin kann es sich in der allgemeinen Formel (I) bei den nicht hydrolysierbaren Resten R sowohl um Reste mit oder ohne funktionelle Gruppen handeln. So kann R in der allgemeinen Formel (I) ohne funktionelle Gruppen beispielsweise ein Alkyl-, Alkenyl-, Alkinyl-, Aryl-, Alkylaryl- oder Aralkyl-Rest sein. Die Reste R und X können ggf. einen oder mehrere übliche Substituenten, wie beispielsweise Halogen oder Alkoxy aufweisen.
Die Oberflächenmodifizierung mit Organopolysiloxanen kann kovalent oder adsorptiv erfolgen, Beispiele solcher Substanzklassen sind end- und/oder kammständig mit Polyether- oder Polyesterketten modifizierte Organopolysiloxane. Ebenso können monofunktionelle Polysiloxane zur Oberflächenmodifizierung der Partikel eingesetzt werden, beispielsweise mit Trimethylsilylgruppen endverkappte α-Halogen-, α-Alkoxy- und α-Hydroxydimethylpolysiloxane.

Ein weiterer Gegenstand der Erfindung ist ein Verfahren zur Herstellung der erfindungsgemäßen Kompatibilisierungsmittel, indem die Partikel in das Trägermedium eingearbeitet werden.

Bei den erfindungsgemäßen Partikeln handelt es sich in der Regel um sehr feinkörnige Materialien, die stark stauben und damit schwierig sind in der Handhabung. Es werden hierzu spezielle Apparaturen benötigt, die vielen Herstellern von Polyolmischungen in der Regel nicht zur Verfügung stehen, bzw. eine zusätzliche Investition bedeuten würden.

Die Einarbeitung der Partikel in das Trägermedium erfolgt in der Regel durch Anwendung hoher Scherkräfte. Hierbei können die nach dem Stand der Technik bekannten Methoden zur Einarbeitung von Feststoffen in Flüssigkeiten verwendet werden, wie beispielsweise Dispergatoren, Mühlen (Perl- oder Strahlmühle), Extruder oder Kneter. Wird die Einarbeitung bei erhöhter Temperatur durchgeführt, kann man als Trägermedien auch Substanzen nehmen, die bei Raumtemperatur fest sind.

Durch die Einarbeitung der Partikel in ein Trägermedium vermeidet man bei der späteren Verwendung des Kompatibilisierungsmittels die Handhabung von eventuell feinteiligen Feststoffen und die damit zusammenhängenden Nachteile wie beispielsweise Staubanfall, Dosierproblematik von feinteiligen Feststoffen geringer Dichte, Inhalationstoxizität oder auch statische Aufladung.

Die Kompatibilisierungsmittel können je nach verwendetem Verfahren beispielsweise als viskose Flüssigkeiten, Pasten oder in Form von Granulaten anfallen.

Dadurch können die Kompatibilisierungsmittel einfach in die zu kompatibilisierende Polyolymischung eingerührt werden. Es werden hierbei keine hohen Scherkräfte benötigt, so dass für diesen Prozess keine speziellen Rühraggregate benötigt werden. Damit wird durch die erfindungsgemäßen Kompatibilisierungsmittel die Herstellung von lagerstabilen Mischungen, bestehend aus nicht mischbaren Polyolen, deutlich verbessert und vereinfacht.

Es werden beim Einarbeiten des erfindungsgemäßen Kompatibilisierungsmittels keine hohen Scherkräfte benötigt. Es können dementsprechend Rührorgane und Rührer verwendet werden, die beispielsweise in normalen Kesseln zur Herstellung von Polyolmischungen vorhanden sind.

Die erfindungsgemäßen Kompatibilisierungsmittel, enthaltend zumindest die Partikel und das Trägermedium, besitzen bei 80°C eine Viskosität von 5 bis 50.000 mPas. Den Zusammensetzungen ist gemein, dass sie das Problem des Staubens vermeiden und bei Raumtemperatur beispielsweise als viskose Flüssigkeit vorliegen oder gegebenenfalls sogar als einfach dosierbares Granulat konfektioniert werden können.

Als Trägermedien können alle Substanzen eingesetzt werden, die geeignet sind mit den Partikeln in eine handhabbare Form gebracht zu werden und die in der späteren Anwendung bei der Herstellung eines Schaumes aus der Polyolmischung keine Nachteile mit sich bringen.

Das Trägermedium muss mit mindestens einem der Polyole verträglich (bzw. mischbar) sein, damit das damit hergestellte Kompatibilisierungsmittel in die inkompatible Polyolmischung eingearbeitet werden kann.
Erst bei der Einarbeitung des Kompatibilisierungsmittels in die Polyolmischung werden die Partikel "freigesetzt" und können ihre Emulgatorwirkung entfalten.

Unter Verträglichkeit im Rahmen dieser Erfindung ist zu verstehen, dass sich eine Mischung aus verschiedenen Komponenten nicht innerhalb des betrachtenten Zeitraums durch Aufrahmen, Absetzen oder auch Phasentrennung wieder aufspaltet. Es können hier beispielsweise alle Substanzen eingesetzt werden, die auch als Polyolkomponente in der Polyurethanschaumherstellung Verwendung finden. Dies sind beispielsweise Polyetherpolyole, Polyesterpolyole oder auch Polyole, die auf nachwachsenden Rohstoffen basieren, soganannte Natural Oil based Polyols (NOP's). Es können beispielsweise aber auch hochmolekulare Polyole verwendet werden, die bei Raumtemperatur hochviskos oder fest sind. Dies können beipielsweise Polyetherpolyole mit einer hohen Molmasse oder hohen Anteilen an Oxyethylen-Einheiten sein. So sind beispielsweise reine Polyethylenglykole mit einer mittleren Molmasse von 1000 g/mol bei Raumtemperatur bereits fest.
Als Polyetherpolyole können beispielsweise Mischpolymerisate bestehend aus Ethylenoxid und Propylenoxid verwendet werden, die auf ein- oder mehrwertigen Startermolekülen basieren. Beispielsweise kommen in Frage: Polyether PPG 2290, Polyether PPG 2470, Polyether BP 1042 oder Polyether ALP 1418 von Evonik Goldschmidt oder Polyglykol B 11-Typen, Polyglykol D-Typen oder Polyglykol P 41-Typen von Clariant oder auch Pluronic-Typen wie Pluronic PE 3100, Pluronic PE 4300, Pluronic PE 6400, Pluronic PE 6800, Pluronic PE 9200, Pluronic PE 10500, Pluronic RPE 1720, Pluronic RPE 1740, Pluronic RPE 2035 von BASF.
Ebenso geeignet als Trägermedium sind Polyole, die einen hohen Anteil an Oxyethylen-Einheiten enthalten. Diese Polyole haben einen höheren Schmelzpunkt als die klassischerweise in der Verschäumung verwendeten Polyole. Bei der Herstellung der Kompatibilisierungsmittel kann die Verwendung von solchen EOreichen Polyolen von Vorteil sein, wenn man die Einarbeitung der Partikel bei erhöhten Temperaturen durchführt, bei denen das Polyol flüssig ist und anschließend bei Raumtemperatur einen Feststoff erhält, der nur wenig Neigung zum Verkleben zeigt.
Hier kommen beispielsweise Alkohol- oder Amin-basierende Ethoxylate in Frage wie beispielsweise Butylglykol, Butyldiglykol, Alkylphenol-Ethoxylate wie z.B. Arkopal-Typen von Clariant, oder Polyglykol M-Typen von Clariant wie Polyglykol M 2000 oder Polyglykol M 1000, Lutensol-Typen von BASF, Tagat-Typen wie TAGAT R 200, TAGAT CH 40, TAGAT CH 60, TAGAT V 20 oder Tegoalkonol TD 6 oder Tegoalkanol TD 12, sowie Varonic T 202, Varonic K 205 oder Varonic T 215 von Evonik Goldschmidt.
Es können als Trägermedien auch reine Polyethylenglykole (PEG) verwendet werden, die wie beispielsweise PEG 400, PEG 600, PEG 1000, PEG 2000, PEG 6000, PEG 8000, PEG 12000, PEG 20000 oder PEG 35000 (alle erhältlich bei Clariant).

Ebenso können geeignete Substanzen eingesetzt werden, die beispielsweise aus kosmetischen oder technischen Anwendungen bekannt sind. Es kann sich hierbei beispielsweise um Ester, Amide oder Carbonate handeln wie beispielsweise Phthalate, Trimellitate, Adipinsäureester, sogenannte dibasische Ester, Isononanoate, Octoate, Nonanoate, iso-Nonanoate, Benzoate, Stearate, Cocoate, Caprate oder Ricinoleate, die beispielsweise unter den Bezeichnungen:
TEGOSOFT GMC 6, TEGOSOFT GC, TEGOSOFT CI, TEGOSOFT CT, TEGOSOFT OS, TEGOSOFT DO, TEGOSOFT HP, TEGOSOFT E, TEGOSOFR G 20, TEGOSOFT TIS, TEGOSOFT TN, TEGOSOFT CR, TEGOSOFT TN, TEGOSOSOFT DEC, TEGOSOSFT P, TEGOSOFT M, TEGOSOFT MM, TEGOSOFT PC 31, TEGOSOFT LSE 65 K, ISOLAN GI 34, ISOLAN GO 33, ISOLAN IS, ISOLAN GPS, TEGIN O V, TEGO SML, TEGO SMO V, TEGO SMA, TEGO STO V, VARONIC APM, TEGOSOFT CR, TEGOSOFT TIS, TEGOSOFT DEC, REWOMID C 212, REWOMID DC 212, REWOMID DC 212 S, REWOMID DL 240, REWOMID SPA, REWOMID IPP 240, REWOCID DU 185 SE, REWOPAL V 3646, REWOPAL V 3454, REWOPAL V 3564, REWODERM LI S 80, REWODERM LI 63 von Evonik Goldschmidt, als VESTINOL INB, VESTINOL 9 von Evonik Degussa, als Palatinol-Typen, Palamoll-Typen, Plastomoll-Typen von BASF oder als Jayflex DINP, Jayflex DIDP, Jayflex DIUP von Exxon erhältlich sind.

Ebenso kommen als Trägermedien alle dem Fachmann bekannten Substanzen in Frage, die als Hilfs- und Zusatzstoffe in einer Polyurethanschaumzusammensetzung verwendet werden, um die Herstellung und Verwendung des Polyurethanschaums zu beeinflussen.
Als Hilfs- und Zusatzstoffe werden hier unter anderem Treibmittel, Stabilisatoren, Katalysatoren, Flammschutzmittel, Pigmente, Farbstoffe und weitere Stoffe, wie beispielsweise, aber nicht abschließend erwähnt, auch Biozide, Antistatika, etc. verstanden, die zur Herstellung und Verwendung des Polyurethanschaums benötigt werden.

Nach den dem Fachmann geläufigen Gesetzmäßigkeiten betreffend die Mischbarkeit inkompatibler Phasen sollten Partikel, die sich an der Grenzfläche zwischen zwei Phasen befinden, inkompatibel mit der inneren und nur sehr wenig kompatibel mit der äußeren Phase sein.
Überraschenderweise wurde im Rahmen dieser Erfindung gefunden, dass die Partikel in einem Trägermedium dispergiert werden können, welches beispielsweise in dem System als eine von mehreren Polyolkomponenten schon enthalten ist.

Ein weiterer Gegenstand der Erfindung ist die Verwendung einer der nicht miteinander mischbaren Polyolkomponenten als Trägermedium für die Herstellung des Kompatibilisierungmittels. Abhängig vom Anwendungsgebiet kann sowohl die polarere als auch die unpolarere Polyolkomponente als Trägermedium ausgewählt werden.

Bei der Herstellung der Kompatibilisierungsmittel durch Einarbeiten der Partikel in das Trägermedium kann es von Vorteil sein, Dispergiermittel zu verwenden um beispielsweise den Anteil an Partikeln in der Formulierung zu maximieren oder die Viskosität der Formulierung zu minimieren.

Als Dispergiermittel können die nach dem Stand der Technik bekannten Substanzen verwendet werden wie beipielsweise ionische, nichtionische oder amphotere Verbindungen, mit tensidischem Charakter. Beispielsweise sind die von Evonik Goldschmidt als Dispergiermittel hergestellten TEGOMER^{®} DA- und TEGODISPERS^{®}- Typen geeignet.

Ein weiterer Gegenstand dieser Erfindung sind die Zusammensetzungen bestehend aus einem oder mehreren Trägermedien und den kompatibilisierenden Partikeln als lagerstabiles Kompatibilisierungsmittel, dass den nichtmischbaren Polyolmischungen zugesetzt wird. Es können auch Mischungen mehrerer verschiedenartiger Typen von kompatibilisierenden Partikeln eingesetzt werden.

Ein weiterer Gegenstand dieser Erfindung ist die vorteilhafte Verwendung der Kompatibilisierungsmittel als Zusammensetzungen aus einem oder mehreren Trägermedien und den kompatibilisierenden Partikeln, das den nichtmischbaren Polyolmischungen zur Homogenisierung zugesetzt wird.

Besonders bevorzugt werden hierbei oxidische Partikel, z. B. pyrogene, gefällte oder nach dem Stöber-Prozess hergestellte Silicapartikel, eingesetzt. Erstere werden beispielsweise als Aerosile^{®} von Evonik Degussa hergestellt. Dies sind beispielsweise pyrogene Kieselsäure oder pyrogene Metalloxide wie Aerosil A 200, Aerosil R 202, Aerosil R 805, Aerosil R 972, Aerosil R 974, Aerosil R 8200, Aerosil R 9200, Aeroxid Alu C oder Aeroxid Alu C 805. Aerosil und Aeroxid sind eingetragene Warenzeichen der Evonik Degussa.

Besonders bevorzugt wird bei dem erfindungsgemäßen Kompatibilisierungsmittel auf Dispergiermittel und Hilfs- und Zusatzstoffe für den PU-Schaum verzichtet, so dass das Kompatibilisierungsmittel aus den Partikeln und Polyolen als Trägermedium besteht.
Als feste Trägermedien werden bevorzugt Polyetherpolyole mit einem hohen Anteil an Oxyethylen-Einheiten verwendet.
Als flüssige Trägermedien werden bevorzugt Carbonsäureester verwendet, die aus kosmetischen Anwendungen bekannt sind (oben genannte TEGOSOFT^{©}-Typen).
Die Einarbeitung der Kompatibilisierungsmittel erfolgt durch Einrühren mit üblichen Laborrührgeräten wie beispielsweise Magnetrührstäbe oder Flügelrührer. Im Allgemeinen werden keine hohen Scherkräfte benötigt. Wenn nötig wurden die Mischungen auf Temperaturen bis zu 100°C bevorzugt weniger als 90°C, besonders bevorzugt bis 70°C erwärmt um die Kompatibilisierungsmittel einzuarbeiten. Die kompatibilisierte Polyolmischung ist auch nach dem Abkühlen homogen und lagerstabil.
Im Rahmen dieser Anmeldung wird eine Mischung als lagerstabil bezeichnet, wenn sich innerhalb von 48 Stunden bei 25°C keine Ausbildung einer Phasenseparation feststellen lässt.
Je nach Art und Anteil an Partikeln und Trägermedien im Kompatibilisierungsmittel kann es sich um eine Flüssigkeit oder einen Feststoff handeln, auch kann die Zusammensetzung eine pastöse Formulierung darstellen. Entsprechend können die erfindungsgemäßen Kompatibilisierungsmittel beispielsweise auch als Pasten oder Granulate anfallen.
Der Anteil an Partikeln in den Kompatibilisierungsmitteln kann im Bereich von 1 bis 70 Gew.-%, bevorzugt von 5 bis 60 Gew.-%, besonders bevorzugt von 10 bis 50 Gew.-% liegen.

Ein weiterer Gegenstand der Erfindung sind homogene Polyolmischungen, enthaltend auf nachwachsenden Rohstoffen basierende, insbesondere pflanzlich basierende Polyole, gegebenenfalls in Mischung mit Polyesterdiolen oder Polyesterpolyolen.
Ein weiterer Gegenstand der Erfindung sind Polyolmischungen bestehend aus Polyesterpolyolen und auf nachwachsenden Rohstoffen, insbesondere pflanzlich basierten Polyolen zur Herstellung von PU-Schäumen gegebenenfalls enthaltend weitere Hilfs- und Zusatzstoffe.

Ein weiterer Gegenstand der Erfindung sind Polyolmischungen, enthaltend Kompatibilisierungsmittel, enthaltend mindestens zwei nicht miteinander mischbare Polyetherpolyole mit unterschiedlichem Gehalt an Oxyethylen-Einheiten zur Verwendung bei der Herstellung von Polyurethan- und/oder Polyisocyanurat- und/oder Polyharnstoffschäumen, gegebenenfalls enthaltend weitere Hilfs- und Zusatzstoffe.
Ein weiterer Gegenstand dieser Erfindung ist die vorteilhafte Verwendung von zumindest einem aus nachwachsenden Rohstoffen hergestellten Polyol in den Polyolzusammensetzungen, bevorzugt sind alle Polyole der kompatibilisierten Mischung aus nachwachsenden Rohstoffen hergestellt.
Aus den homogenen Mischungen sind unter Verwendung der Kompatibilisierungsmittel (homogene) reaktive Mischungen zugänglich, die aus:
(I) den homogenen Polyolmischungen, enthaltend diese Kompatibilisierungsmittel und gegebenenfalls weitere Hilfs- und Zusatzstoffe sowie
(II) einem oder mehreren Isocyanaten
   bestehen.

Ein weiterer Gegenstand der Erfindung sind kompatibilisierte Polyolmischungen die bei Umsetzung mit Polyisocyanaten zur Herstellung von Polyurethan- und/oder Polyisocyanurat- und/oder Polyharnstoffschäumen geeignet sind.

Ein weiterer Gegenstand der Erfindung sind Polyurethan- und/oder Polyisocyanurat- und/oder Polyharnstoffschäume, hergestellt unter Verwendung der kompatibilisierten Polyolmischungen.

Ein weiterer Gegenstand der Erfindung sind die durch den Zusatz der erfindungsgemäßen Kompatibilisierungsmittel hergestellten vor Phasentrennung stabilisierten Polyolmischungen, die gegebenenfalls auch weitere Hilfs- und Zusatzstoffe enthalten können.

Besonders bevorzugt werden die erfindungsgemäßen Kompatibilisatoren in Polyolmischungen verwendet, die Polyesterpolyole und Naturöl basierende Polylole (NOPs) enthalten, da diese beiden Klassen von Polyolen beim Mischen häufig zur Phasentrennung neigen.
Mischungen dieser Art werden häufig bei der Herstellung von Polyurethan- oder Polyisocyanurat-Hartschäumen verwendet.

Außerdem bevorzugt ist die Verwendung der erfindungsgemäßen Kompatibilisatoren in Polyetherpolyolmischungen, deren einzelne Komponenten unterschiedliche Polaritäten aufweisen und daher nicht miteinander mischbar sind, was dann zur Auftrennung der Polyolmischung in mehrere Phasen führt. Dies kann z.B. durch einen unterschiedlichen Anteil an Oxyethylen-Einheiten (Polyethylenglykol) hervorgerufen werden.
Mischungen mit erfindungsgemäßen Kompatibilisatoren können damit auch vorteilhaft bei der Herstellung von Weichschaumsystemen eingesetzt werden; diese weisen besondere mechanische Eigenschaften wie z.B. Viskoelastizität oder hohe Elastizität auf. Bislang konnten solche (inhomogene) Mischungen nur durch Agitation homogen gehalten werden.

Zur Herstellung der Schäume können alle geeigneten Polyole eingesetzt werden. Es kann sich hierbei um Polyether- oder Polyesterpolyole handeln, die typischerweise 2 bis 6 OH-Gruppen pro Molekül tragen und neben Kohlenstoff, Wasserstoff und Sauerstoff auch Heteroatome wie Stickstoff, Phosphor oder Halogene enthalten können.
Entsprechend den geforderten Eigenschaften der Schäume werden spezielle Polyole verwendet wie beispielsweise beschrieben in: US 2007/0072951 A1, WO 2007/111828 A2, US 2007/0238800, US 6359022 B1 oder WO 96 12759 A2.
Ebenso werden Pflanzenöl-basierenden Polyole in verschiedenen Patentschriften beschrieben, wie beispielsweise in der WO 2006/094227, WO 2004/096882, US 2002/0103091, WO 2006/116456 und EP 1 678 232.

Als Polyisocyanate für die Herstellung der Polyurethanschäume können die auf diesem Gebiet für die jeweiligen Schaumtypen üblichen Verbindungen wie sie z. B. in EP 1 712 578 A1, EP 1 161 474, WO 058383 A1, US 2007/0072951 A1, EP 1 678 232 A2 und der WO 2005/085310 genannt sind, verwendet werden.

Zur Herstellung eines Schaums wird ein Treibmittel benötigt. Es können alle bekannten Treibmittel eingesetzt werden. Dies kann als chemisches Treibmittel Wasser sein, welches durch Reaktion mit den Isocyanaten Kohlendioxid freisetzt. Es kann aber auch direkt Kohlendioxid als physikalisches Treibmittel verwendet werden oder andere Treibmittel, die durch einen geeigneten Siedepunkt bei der exothermen Reaktion verdampft werden. Beispiele hierfür sind Halogenkohlenwasserstoffe oder Kohlenwasserstoffe wie z.B. Pentan-Isomere. Es sind auch Kombinationen der beiden Methoden möglich.

Die Urethan-Schaumreaktion wird üblicherweise durch geeignete Katalysatoren ausgelöst bzw. gesteuert. Es werden hier beispielsweise tertiäre Amine oder Metall-haltige Katalysatoren (enthaltend beispielsweise Zinn-, Kalium-, Zink-Verbindungen) eingesetzt.

Als Stabilisatoren können die nach dem Stand der Technik bekannten Substanzen eingesetzt werden. Meist handelt es sich hierbei um organisch modifizierte Siloxane wie sie zum Beispiel in EP 0839852, WO 2005/118668, US 20070072951 A1, DE 2533074, EP 1537159, EP 1712576, EP 1544235, EP 0533202, US 3933695, EP 0780414, DE 4239054, DE 4229402, DE 102004001408, EP 0867465 und den darin zitierte Dokumenten beschrieben werden.

Als Flammschutzmittel können die nach dem Stand der Technik bekannten Substanzen eingesetzt werden. Dies sind häufig Phosporhaltige Verbindungen, bevorzugt Phosporsäureester. Diese werden unter anderem von LANXESS unter den Produktnamen Disflamoll^{®} und Levagard^{®} oder von Clariant unter den Produktnamen Exolit^{®} oder Hordaphos^{®} vertrieben.

Die für die Herstellung der Polyurethanschäume verwendbaren Hilfs- und Zusatzmittel wie z. B. Katalysatoren, Stabilisatoren, Flammschutzmittel, Treibmittel sind ebenfalls die aus dem Stand der Technik bekannten Komponenten.

Eine zusammenfassende Darstellung des Stands der Technik, der verwendeten Rohstoffe und anwendbaren Verfahren findet sich in G. Oertel (Hrsg.): "Kunststoffhandbuch", Band VII, C. Hanser Verlag, München, 1983, in Houben-Weyl: "Methoden der organischen Chemie", Band E20, Thieme Verlag, Stuttgart 1987, (3), Seite 1561 bis 1757, und in "Ullmann's Encyclopedia of Industrial Chemistry" Vol. A21, VCH, Weinheim, 4. Auflage 1992, S. 665 bis 715.

Die erfindungsgemäßen Kompatibilisierungsmittel und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Weitere Gegenstände der Erfindung sind durch die Ansprüche gekennzeichnet.

Ausführungsbeispiele:
Nachfolgende Beispiele sollen zur Verdeutlichung der Erfindung dienen, sie stellen jedoch keinerlei Einschränkung dar.

Als homogen sind Zusammensetzungen im Rahmen dieser Anmeldung anzusehen, die beispielsweise beim Stehen in einem 100 ml Standzylinder über den angegebenen Zeitraum (in Stunden) bei der angegebenen Raumtemperatur keine Phasentrennung von über 3 ml erkennen lassen. Ein solches Ergebnis wird als "gut" bezeichnet. Ist die Homogenität sogar über einen längeren Zeitraum gegeben oder aber die Phasenausbildung wesentlich geringer als 50 % des vorgegebenen Wertes, so ist das Ergebnis als "sehr gut" zu bezeichnen. Ist hingegen die Phasenbildung stärker ausgeprägt und größer als 150 % des vorgegebenen Wertes, so ist das Ergebnis als "ausreichend" zu bezeichnen, bei mehr als 200 % als "ungenügend".
Generell wurde festgestellt, dass die Lagerstabilität mit höherer Temperatur schlechter wird. Allerdings wird in der Praxis oftmals beim Transport oder Lagerung einer Polyolmischung nicht bei Raumtemperatur gearbeitet sondern auf 30-40°C erwärmt. Daher wurden die Versuche bei Temperaturen von 20 und 40°C durchgeführt.

### Herstellung der Kompatibilisierungsmittel:

### Beispiel 1:

In einem Kneter (Firma List CRP 2.5 Batch-Kneter) werden 800 g Polyglykol M 2000 (Produkt der Firma Clariant) bei 75°C vorgelegt und über einen Zeitraum von 1 Stunde 200 g Aerosil R 972 (Produkt der Firma Evonik Degussa) zugegeben. Anschließend wird für 2 Stunden bei 70°C nachgeknetet. Nach dem Abkühlen auf Raumtemperatur erhält man einen Feststoff bzw. ein Granulat.

### Beispiel 2:

Es werden 113 g Aerosil R 974 und 1387 g eines Glycerin gestarteten Polyols mit einer Molmasse von 6000 g/mol basierend auf 85% Propylenoxid und 15% Ethylenoxid bei 25°C in einem Becher mit einer Dissolverscheibe bei 2000 U/min verrührt bis eine homogene Paste entsteht.

### Beispiel 3:

Wie in Beispiel 1 beschrieben werden 610 g Aerosil R 972 (von Evonik Degussa) und 390 g Polyethylenglykol 600 (PEG 600, von Clariant) zu einem Granulat verarbeitet.

### Beispiel 4:

Wie in Beispiel 1 beschrieben werden 450 g Aerosil R 972 (von Evonik Degussa) und 650 g PEG 2000 (von Clariant) zu einem Granulat verarbeitet.

### Beispiel 5:

Wie in Beispiel 1 beschrieben werden 200 g Aerosil R 805 (von Evonik Degussa) und 800 g PEG 2000 (von Clariant) zu einem Granulat verarbeitet.

### Beispiel 6:

Wie in Beispiel 1 beschrieben werden 475 g Aerosil R 972 (von Evonik Degussa)und 525 g TAGAT R 200 (von Evonik Goldschmidt) zu einem Granulat verarbeitet.

### Beispiel 7:

Es werden 10,65 g Aerosil R 805 und 89,35 g eines Glycerin gestarteten Polyols mit einer Molmasse von 6000 g/mol basierend auf 85 % Propylenoxid und 15 % Ethylenoxid bei 25°C in einem Becher mit einer Dissolverscheibe bei 2000 U/min verrührt bis eine homogene klare Paste entsteht.

### Beispiel 8:

Es werden 150 g Aerosil R 805 und 850 g Butyldiglykol in einem Becher mit einer Dissolverscheibe bei 2000 U/min verrührt bis eine homogene Paste entsteht.

### Beispiel 9:

Es werden 310 g Aerosil^{®} R 805 und 1000 g TEGOSOFT^{®} M mit einer Dissolverscheibe bei 5000 U/min verrührt, anschließend 12,4 g Octyltrimethoxysilan zugegeben und weiter verrührt. Anschließend wird das Gemisch in eine Perlmühle (Lab-Star von NETSCH) gegeben und dort bei 1500 U/min und einer Temperatur von 45°C für 6 Stunden bearbeitet, wobei Mahlperlen mit einer Größe von 1,0-1,2 mm verwendet werden. Man erhält eine opake bis transluzente viskose Flüssigkeit.

### Beispiel 10:

Es werden 56,7 g TEGOSOFT^{®} M vorgelegt und nach und nach 22,1 g Aerosil^{®} R 972 mit einer Dissolverscheibe, mit zunächst 500 U/min eingearbeitet. Es entsteht eine thixotrope Flüssigkeit, die durch wiederholte kurzzeitige Erhöhung der Drehzahl auf 5000 U/min homogenisiert wird. Nach Beendigung der Zugabe des Aerosils wird das Gemisch abschließend 15 min bei 5000 U/min homogenisiert. Anschließend werden 1,32 g Octyltrimethoxysilan zugegeben und das Gemisch 6 min mit einer Ultraschallsonotrode (Leistung 60 W) homogenisiert. Man erhält eine opake bis transluzente Flüssigkeit.

### Beispiel 11:

### (Verwendung eines Flammschutzmittels als Trägermedium)

Analog zu Beispiel 10 werden in eine Mischung bestehend aus 39 g TEGOSOFT^{®} M und 12 g Tris(2-chlorisopropyl)phosphat 24 g Aerosil^{®} R 8200 eingearbeitet und anschließend noch mit 1,4 g Octyltrimethoxysilan umgesetzt. Man erhält eine opake bis transluzente Flüssigkeit.

### Beispiel 12:

### (Zusatz eines Schaumstabilisators zum Kompatibilisator)

Analog zu Beispiel 10 werden in eine Mischung bestehend aus 39 g TEGOSOFT^{®} M und 12 g Tris(2-chlorisopropyl)phosphat 24 g Aerosil^{®} R 974 eingearbeitet, anschließend noch mit 1,4 g Octyltrimethoxysilan umgesetzt und schließlich 2 g eines organomodifizierten Siloxans, TEGOSTAB^{®} B 8469 von Evonik Goldschmidt zugesetzt. Man erhält eine opake bis transluzente Flüssigkeit.

Anwendung der Kompatibilisierungmittel in Polyolmischungen:
Es wurden Lagerversuche mit verschiedenen Polyol-Mischungen durchgeführt.

Verwendete Rohstoffe:
Polyol A: Polyesterpolyol: Stepanpol PS 2352 (von Stepan)
Polyol B: Polyesterpolyol: Terol 563 (von Oxid)
Polyol C: Polyesterpolyol: Terate 2541 (von Invista)
Polyol D: Rizinusöl (Fa. Alberding + Boley, Krefeld )
Polyol E: PO-reiches Polyetherpolyol: Voranol CP 3322 (von Dow)
Polyol F: EO-reiches Polyetherpolyol, Voranol CP 1421 (von Dow)
Polyol G: Pflanzenöl-basierendes Polyol auf Basis Soya-Öl
Polyol H: Kaltschaum-Polyetherpolyol: Hyperlite^{®} Polyol 1629 (von Bayer)
Polyol I: Palm-Öl basierendes Polyol
Polyol J: Kaltschaum-Polyetherpolyol: Desmophen VP. PU 10WF15 (von Bayer)

Die Einarbeitung der Kompatibilisierungsmittel aus den Beispielen 1 bis 12 erfolgte durch Einrühren der Pasten oder Granulate zu den entsprechenden Polyolmischungen mit üblichen Laborrührgeräten wie beispielsweise Magnetrührstäbe oder Flügelrührer. (Es werden hier also keine hohen Scherkräfte angewendet, wie bei der Herstellung der Kompatibilisierungsmitteln).

Wenn erforderlich wurden die Mischungen auf Temperaturen bis zu 70 °C erwärmt um die Kompatibilisierungmittel einzuarbeiten. Anschließend wurden die Mischungen bei den angegebenen Temperaturen gelagert und auf ihre Stabilität überprüft.

In Tabelle 1 sind die verwendeten Polyol-Komponenten und deren Anteile, die jeweiligen Kompatibilisierungsmittel und deren Anteile, die Lagerungstemperatur und die Stabilität der Mischungen zusammengefasst. Es wurde in den folgenden Zeiträumen die Stabilität optisch beurteilt: 2 h, 4 h, 8 h, 16 h, 24 h, 36 h, 48 h und dann im Abstand von 24 h und eine qualitative Beurteilung vorgenommen.

Beispiele 16, 20, 23, 24 und 25 sind Referenzbeispiele.

**Tabelle 1:**

| Bsp. | Polyol,Tei le | Polyol, Teile | Kompat., Teile | Temp. | Stabilität |
|---|---|---|---|---|---|
| 13 | A, 78 | D, 20 | Bsp.1, 2 | 20°C | 120 h, gut |
| 14 | B, 78 | D, 20 | Bsp.4, 4 | 20°C | 120 h, gut |
| 15 | C, 78 | D, 20 | Bsp.12, 4 | 20°C | 120 h, gut |
| 16 | E, 77 | F, 20 | Bsp.6, 3 | 40°C | 48 h, sehr gut |
| 17 | J, 48 | I, 48 | Bsp.2, 4 | 40°C | 48 h, gut |
| 18 ¹⁾ | E, 50 | I, 50 | Bsp.1, 2 | 40°C | 48 h, gut |
| 19 ¹⁾ | E, 50 | I, 50 | Bsp.10, 4 | 40°C | 48 h, gut |
| 20 | H, 90 | F, 10 | Bsp.2, 4 | 20°C | 48 h, gut |
| 21 ¹⁾ | E, 50 | G, 50 | Bsp.3, 4 | 40°C | 48 h, gut |
| 22 | A, 78 | D, 20 | Bp.5, 2 | 40°C | 48 h, gut |
| 23 | E, 77 | F, 20 | Bsp.7, 3 | 20°C | 48 h, gut |
| 24 | E, 77 | F, 20 | Bsp.8, 3 | 20°C | 48 h, gut |
| 25 | E, 77 | F, 20 | Bsp.9, 3 | 20°C | 48 h, gut |
| 26 | A, 78 | D, 20 | Bsp.11, 2 | 20°C | 120 h, gut |
| 27 | B, 78 | D, 20 | Bsp.12, 4 | 20°C | 120 h, gut |
| Vgl.1 | A, 80 | D, 20 | | 20°C | <16 h, ungenügend |
| Vgl.2 | B, 80 | D, 20 | | 20°C | <16 h, ungenügend |
| Vgl.3 | C, 80 | D, 20 | | 20°C | <16 h, ungenügend |
| Vgl.4 | J, 50 | I, 50 | | 20°C | <16 h, ungenügend |
| Vgl.5 ¹⁾ | E, 50 | I, 50 | | 20°C | <4 h, ungenügend |
| Vgl.6 ¹⁾ | E, 50 | G, 50 | | 20°C | <16 h, ungenügend |
| Vgl.7 ²⁾ | A, 80 | D, 20 | | 20°C | 24 h, ungenügend |
| Vgl.8 ³⁾ | B, 80 | D, 20 | | 20°C | 24 h, ungenügend |

| | | | | | |
|---|---|---|---|---|---|
| ¹) Die Mischung wurde zusätzlich mit 4 Teilen Wasser versetzt. ²) Die Mischung wurde zusätzlich mit 2 Teilen TAGAT R 200 versetzt. ³) Die Mischung wurde zusätzlich mit 2 Teilen PEG 2000 versetzt. | | | | | |

Die Beispiele zeigen, dass die Lagerstabilität der Polyolmischungen durch die Verwendung der erfindungsgemäßen Kompatibilisierungsmitteln deutlich verbessert werden kann. Die Vergleichsbeispiele bei denen keine oder nicht-erfindungsgemäße Kompatibilisatoren eingesetzt wurden zeigen eine deutlich geringere Lagerstabilität.

### Herstellung von PU-Schäumen:

### Ausprüfung im Hartschaum:

### Beispiel 28:

Für die anwendungstechnische Ausprüfung der erfindungsgemäßen Formulierungen wurde folgende Schaumformulierung verwendet:

| Komponente | Einsatzmenge |
|---|---|
| Polyol* | 100 Teile |
| DMCHA | 1,5 Teile |
| Wasser | 2 Teile |
| TCPP | 15 Teile |
| Kosmos 75 MEG | 3,5 Teile |
| n-Pentan | 12 Teile |
| TEGOSTAB B 8469 | 2 Teile |
| | |
| MDI** | 205,7 Teile |

| | |
|---|---|
| * Mischung aus Beispiel 13 nach 36 h Lagerung ** polymeres MDI, 200 mPa*s, 31.5% NCO, Funktionalität 2.7 | |

DMCHA: Dimethylcyclohexylamin dient als aminischer Katalysator, TCPP: Trischloropropylphosphat ist ein Flammschutzmittel, Kosmos 75 MEG ist ein metallbasierender Katalysaotor von Evonik Goldschmidt, TEGOSTAB B 8469 ist ein Schaumstabilisator von Evonik Goldschmidt.

Die Durchführung der Verschäumungen erfolgte im Handmischverfahren. Dazu wurden Polyol, Katalysatoren, Wasser, Flammschutzmittel und Treibmittel in einen Becher eingewogen und mit einem Tellerrührer (6 cm Durchmesser) 30 s bei 1000 Upm vermischt. Durch erneutes abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine mit Papier ausgekleidete Kastenform von 27 cm x 14 cm x 14 cm Größe überführt. Nach dem Aushärten wurden aus dem Schaum verschiedene Probekörper geschnitten und folgende Beurteilungen und Messungen durchgeführt:
Der Schaum wies eine sehr feine Zellstruktur auf. Bodenzonenstörungen waren nicht vorhanden.
   Raumgewicht: 23,3 kg/m³
   Lambda-Wert (parallel zur Steigrichtung): 24,9 mW/m*K
   Lambda-Wert (senkrecht zur Steigrichtung): 23,1 mW/m*K
   10 % Stauchhärte (parallel zur Steigrichtung): 187 kPa
   10 % Stauchhärte (senkrecht zur die Steigrichtung): 55 kPa
   Geschlossenzelligkeit: 84,8 %

### Vergleichsbeispiel 9:

Unter Verwendung der in Beispiel #29 beschriebenen Schaumformulierung wurde die Polyolmischung aus dem Vergleichsbeispiel 1 nach 12 h Lagerung als Polyolkomponente eingesetzt. Bei der Verschäumung kam es zu Kollapserscheinungen. Es wurde ein Schaumkörper von sehr minderwertiger Qualität erhalten.

### Ausprüfung im Weichschaum:

### Beispiel 29:

Die erfindungsgemäßen Polyolmischungen wurden in einer typischen Polyurethanheissweichschaumformulierung untersucht:
Rezeptur für die Herstellung der Polyurethanheißweichschäume:
   100 Gew.-Teile der Polyolmischung aus Beispiel 18, 4,0 Gew.-Teile Wasser (chemisches Treibmittel), 1,0 Gew.-Teile TEGOSTAB B 2370, 0,2 Gew.-Teile Dimethylethanolamin, 0,2 Gew.-Teile Zinnkatalysator (Kosmos 19 von Evonik Goldschmidt), 2,5 Gew.-Teile Methylenchlorid (zusätzliches physikalisches Treibmittel), 53 Gew.-Teile Isocyanat (Toluylendiisocyanat, TDI-80)(Verhältnis von Isocyanatgruppen zu isocyanatverbrauchenden reaktiven Gruppen = 1,15)

### Durchführung:

Polyolmischung, Wasser, Katalysatoren und Stabilisator wurden in einem Pappbecher vorgelegt und mit einer Rührscheibe durchmischt (45 s mit 1000 U/min). Anschließend wurde das Methylenchlorid zugegeben und erneut 10 s mit 1000 U/min vermischt. Anschließend wurde das Isocyanat (TDI-80) zugegeben und noch einmal mit 2500 U/min für 7 s gerührt. Das Gemisch wurde dann in eine Kiste mit einer Grundfläche von 15 cm x 15 cm gefüllt. Während des Aufschäumens wurde dann die Steighöhe mittels einer Ultraschallhöhenmessung gemessen. Die Steigzeit bezeichnet diejenige Zeit, die verstreicht, bis der Schaum seine maximale Steighöhe erreicht hat. Der Rückfall bezeichnet das Absacken der Schaumoberfläche nach dem Abblasen des Polyurethanheissweichschaumes. Dabei wird der Rückfall 3 min nach dem Abblasen gemessen. Das Raumgewicht wurde gemäß DIN EN ISO 845 und DIN EN ISO 823 gemessen. Die Zellzahl wurde mittels einer Lupe mit Skalierung an drei Stellen ausgezählt und die Werte gemittelt.

Man erhielt folgende Ergebnisse:
Steigzeit: 195 s
Steighöhe: 21 cm
Rückfall: 0,1 cm
Zellenzahl: 9 Zellen/cm

### Ausprüfung im Formschaum:

### Referenzbeispiel 30:

Es wurde folgende Rezeptur verwendet:
100 Teile Polyolmischung wie in Beispiel 20 beschrieben, 0,5 Teile der TEGOSTAB^{®} B 4113, 3 Teile Wasser, 2 Teile Triethanolamin, 0,6 Teile TEGOAMIN^{®} 33 und 0,2 Teile Diethanolamin und eine Mischung aus 18,5 Teilen polymeres MDI (44V20 von Bayer) und 27,7 Teilen TDI (Toluylendiisocyanat, T80).

Der Schaum wurde in der bekannten Art und Weise hergestellt, indem man alle Komponenten außer dem Isocyanat in einem Becher mischte, anschließend das Isocyanat zugab und bei hoher Rührerdrehzahl schnell einrührte. Dann gab man das Reaktionsgemisch in eine quaderförmige Form mit den Abmessungen 40x40x10 cm, die auf eine Temperatur von 40°C erwärmt war und ließ die Masse für 10 Minuten aushärten. Anschließend wurden die Aufdrückkräfte gemessen. Hierbei wurde der Schaum 10 mal auf 50% seiner Höhe komprimiert. Hierbei ist der 1. Messwert (AD 1 in Newton) ein Maß für die Offenzelligkeit des Schaums. Anschließend wurde (manuell) vollständig aufgedrückt um beim 11. Messwert (AD 11 in Newton) die Härte des aufgedrückten Schaums bestimmen zu können. Danach wurde der Schaum aufgeschnitten um Haut und Randzone zu beurteilen und die Zellenzahl (ZZ) zu bestimmen.

Es wurden die folgenden Ergebnisse erhalten:
AD 1: 1045 N
AD 11: 137 N
ZZ: 10 Zellen pro cm
Haut und Randzone wurden als "gut" beurteilt.

Dies entspricht einer Schaumqualität die den technischen Anforderungen entspricht.

Die Verschäumungsergebnisse zeigen, dass sich mit den erfindungsgemäßen Mischungen PU-Schäume von guter Qualität herstellen lassen, die keinerlei Nachteile aufgrund von Mischungsproblemen der Polyole aufweisen. Die erfindungsgemäßen Kompatibilisierungsmittel haben keinen nachteiligen Einfluss auf die Verschäumung.

## Patentansprüche

1. Homogene Polyolmischungen, enthaltend Kompatibilisierungsmittel für nicht miteinander mischbare Polyolzusammensetzungen sowie enthaltend weitere Hilfs- und Zusatzstoffe, wobei auf nachwachsenden Rohstoffen basierende Polyole enthalten sind, und wobei das Kompatibilisierungsmittel dispergierte Partikel in einem Trägermedium enthält.

2. Homogene Polyolmischungen nach Anspruch 1, **dadurch gekennzeichnet, dass** die Partikel des Kompatibilisierungsmittels ausgewählt sind aus der Gruppe der Halbmetalloxide, Metalloxide, Mischoxide, Nitride, Carbide, Hydroxide, Carbonate, Silikate, Siliconharze, Silikone und/oder Silica und/oder organischen Polymere.

3. Homogene Polyolmischungen nach Anspruch 1 oder 2, **dadurch gekennzeichnet, dass** die im Kompatibilisierungsmittel enthaltenen Partikel oberflächenmodifiziert sind, vorzugsweise mit mindestens einer Verbindung aus der Gruppe der Silane, Siloxane, quaternären Ammoniumverbindungen, kationischen Polymere und Fettsäuren oder deren Anionen.

4. Homogene Polyolmischungen nach einem der Ansprüche 1 bis 3, **dadurch gekennzeichnet, dass** die im Kompatibilisierungsmittel enthaltenen Partikel in mindestens einer Dimension nanoskalig oder nanostrukturiert sind oder dass Nanoobjekte verwendet werden.

5. Homogene Polyolmischungen nach einem der Ansprüche 1 bis 4, **dadurch gekennzeichnet, dass** pflanzlich basierte Polyole enthalten sind.

6. Homogene Polyolmischungen nach einem der Ansprüche 1 bis 5, **dadurch gekennzeichnet, dass** auf nachwachsenden Rohstoffen basierende Polyole in Mischung mit Polyesterdiolen oder Polyesterpolyolen enthalten sind.

7. Homogene Polyolmischungen nach einem der Ansprüche 1 bis 6, enthaltend mindestens zwei nicht miteinander mischbare Polyetherpolyole mit unterschiedlichem Gehalt an Polyethylenoxid-Einheiten zur Verwendung bei der Herstellung von Polyurethan- und/oder Polyisocyanurat- und/oder Polyharnstoffschäumen.

8. Polyurethan- und/oder Polyisocyanurat- und/oder Polyharnstoffschäume, hergestellt unter Verwendung der kompatibilisierten Polyolmischungen gemäß zumindest einem der Ansprüche 1 bis 7.

9. Polyurethan- oder Polyisocyanurat-Hartschäume hergestellt unter Verwendung der kompatibilisierten Polyolmischungen gemäß zumindest einem der Ansprüche 1 bis 7.

10. Polyurethan- oder Polyisocyanurat-Weichschäume hergestellt unter Verwendung der kompatibilisierten Polyolmischungen gemäß zumindest einem der Ansprüche 1 bis 7.

## Claims

1. Homogeneous polyol mixtures comprising compatibilizer for mutually immiscible polyol compositions and also comprising further auxiliaries and additives, where they comprise polyols based on renewable raw materials, and where the compatibilizer comprises dispersed particles in a carrier medium.

2. Homogeneous polyol mixtures according to Claim 1, **characterized in that** the particles of the compatibilizer have been selected from the group of the semimetal oxides, metal oxides, mixed oxides, and of the nitrides, carbides, hydroxides, carbonates, silicates, silicone resins, silicones and/or silica and/or organic polymers.

3. Homogeneous polyol mixtures according to Claim 1 or 2, **characterized in that** the particles present in the compatibilizer have been surface-modified, preferably with at least one compound from the group of the silanes, siloxanes, quaternary ammonium compounds, cationic polymers and fatty acids or anions of these.

4. Homogeneous polyol mixtures according to any of Claims 1 to 3, **characterized in that** the particles present in the compatibilizer are, in at least one dimension, nanoscale or nanostructured, or **in that** nanoobjects are used.

5. Homogeneous polyol mixtures, according to any of Claims 1 to 4, **characterized in that** they comprise vegetable-based polyols.

6. Homogeneous polyol mixtures according to any of Claims 1 to 5, **characterized in that** they comprise polyols based on renewable raw materials in a mixture with polyesterdiols or with polyester polyols.

7. Homogeneous polyol mixtures according to any of Claims 1 to 6, comprising at least two mutually immiscible polyether polyols with different content of polyethylene oxide units for use in the production of polyurethane foams and/or of polyisocyanurate foams and/or of polyurea foams.

8. Polyurethane foams and/or polyisocyanurate foams and/or polyurea foams, produced using the compatibilized polyol mixtures according to at least one of Claims 1 to 7.

9. Rigid polyurethane foams or rigid polyisocyanurate foams produced using the compatibilized polyol mixtures according to at least one of Claims 1 to 7.

10. Flexible polyurethane foams or flexible polyisocyanurate foams produced using the compatibilized polyol mixtures according to at least one of Claims 1 to 7.

## Revendications

1. Mélanges homogènes de polyols, contenant un agent de compatibilisation pour des compositions de polyols non miscibles les uns avec les autres ainsi que d'autres adjuvants et additifs, des polyols à base de matières premières renouvelables étant contenus et l'agent de compatibilisation contenant des particules dispersées dans un milieu support.

2. Mélanges homogènes de polyols selon la revendication 1, **caractérisés en ce que** les particules de l'agent de compatibilisation sont choisies dans le groupe formé par les oxydes semi-métalliques, les oxydes métalliques, les oxydes mixtes, les nitrures, les carbures, les hydroxydes, les carbonates, les silicates, les résines siliconées, les silicones et/ou les silices et/ou les polymères organiques.

3. Mélanges homogènes de polyols selon la revendication 1 ou 2, **caractérisés en ce que** les particules contenues dans l'agent de compatibilisation sont modifiées en surface, de préférence par au moins un composé du groupe formé par les silanes, les siloxanes, les composés d'ammonium quaternaire, les polymères cationiques et les acides gras ou leurs anions.

4. Mélanges homogènes de polyols selon l'une quelconque des revendications 1 à 3, **caractérisés en ce que** les particules contenues dans l'agent de compatibilisation sont nanométriques ou nanostructurées dans au moins une dimension ou **en ce qu'**on utilise des nanoobjets.

5. Mélanges homogènes de polyols selon l'une quelconque des revendications 1 à 4, **caractérisés en ce que** des polyols à base végétale sont contenus.

6. Mélanges homogènes de polyols selon l'une quelconque des revendications 1 à 5, **caractérisés en ce que** des polyols à base de matières premières renouvelables en mélange avec des polyesterdiols ou des polyesterpolyols sont contenus.

7. Mélanges homogènes de polyols selon l'une quelconque des revendications 1 à 6, contenant au moins deux polyétherpolyols non miscibles l'un avec l'autre, présentant une teneur différente en unités de poly(oxyde d'éthylène), destinés à une utilisation lors de la préparation de mousses de polyuréthane et/ou de polyisocyanurate et/ou de polyurée.

8. Mousses de polyuréthane et/ou de polyisocyanurate et/ou de polyurée, préparées avec utilisation des mélanges de polyols compatibilisés selon au moins l'une quelconque des revendications 1 à 7.

9. Mousses dures de polyuréthane ou de polyisocyanurate, préparées avec utilisation des mélanges de polyols compatibilisés selon au moins l'une quelconque des revendications 1 à 7.

10. Mousses souples de polyuréthane ou de polyisocyanurate, préparées avec utilisation des mélanges de polyols compatibilisés selon au moins l'une quelconque des revendications 1 à 7.
